# EUROPÄISCHE PATENTANMELDUNG

(11) **EP 2 624 114 A1**
(43) Veröffentlichungstag der Anmeldung: **07.08.2013**
(21) Anmeldenummer: 12153656.9
(22) Anmeldetag: 02.02.2012
(51) Int. Cl.: G06F 3/048, G06F 3/01

(54) **Handsteuergerät zur Steuerung einer Vorrichtung und Verfahren**

(71) Anmelder: Siemens Aktiengesellschaft, 80333 München (DE)
(72) Erfinder: Jöhnßen, Oliver, 91058 Erlangen (DE); Kollert, Rainer, 91056 Erlangen (DE); Zintel, Andreas, 90478 Nürnberg (DE)

(57) **Zusammenfassung**

Die Erfindung betrifft ein Handsteuergerät (1) zur Steuerung einer Vorrichtung (2), welche eine mehrdimensionale Eingabe von Vorgabewerten (x,y,z) benötigt, wobei durch ein berührungsempfindliches Bedien- und Beobachtungsgerät (11) mit einem Berührungssensor (12), wobei der Berührungssensor (12) mit einer Auswerteeinheit (13) verschaltet ist und der Berührungssensor (12) und die Auswerteeinheit (13) ausgestaltet sind mehrfach Berührungen zu erkennen, wobei der Berührungssensor (12) ein erstes Bedienfeld (21) und ein zweites Bedienfeld (22) aufweist, und die Auswerteeinheit (13) dazu ausgestaltet ist eine Berührung mit einem ersten Bedienobjekt (31) im ersten Bedienfeld (21) und mit einem zweiten Bedienobjekt (32) im zweiten Bedienfeld (22) zu erkennen und entsprechend die Vorgabewerte (x,y,z) bereitstellt.

## Beschreibung

Die Erfindung betrifft ein Handsteuergerät zur Steuerung einer Vorrichtung, welche eine mehrdimensionale Eingabe von Vorgabewerten benötigt.

Auch betrifft die Erfindung ein Verfahren zum Betrieb eines Handsteuergerätes zur Steuerung einer Vorrichtung, welche eine mehrdimensionale Eingabe von Vorgabewerten benötigt, wobei über ein berührungsempfindliches Bedien- und Beobachtungsgerät Vorgabewerte bereitgestellt werden.

Bisherige Handsteuergeräte sind mit Tasten, Schalter und/oder Steuerknüppeln ausgerüstet um jeweils eine Funktion auszulösen. Ein Verfahren zur Steuerung einer Vorrichtung in mehreren Dimensionen ist somit entweder durch sequenzielle Anwendung von Schaltelementen wie Tasten, Schalter und Steuerknüppeln möglich oder durch eine Anwendung von sogenannten Joysticks oder allgemein Pointing Device, wie z.B. eine Computermaus, möglich. Der Nachteil bei der Verwendung der mechanischen Bedienelemente wie z.B. Joystick, Steuerknüppel oder ein Drehpotentiometer liegt darin, dass dies alles mechanische Teile sind, welche einen Verschleiß unterliegen und z.B. durch mechanische Einwirkungen funktionsuntüchtig werden können. Außerdem unterliegen diese mechanischen Steuerelemente einem Alterungsprozess, z.B. können sie ihre Funktionsdichtigkeit verlieren und es kann Feuchtigkeit in die Steuerelemente eintreten.

Es ist Aufgabe der Erfindung ein Handsteuergerät zur Steuerung einer Vorrichtung, welche eine mehrdimensionale Eingabe von Vorgabewerten benötigt, bereitzustellen, wobei diese auf mechanische Steuerelemente verzichten kann.

Bei einem Handsteuergerät zur Steuerung einer Vorrichtung, welche eine mehrdimensionale Eingabe von Vorgabewerten benötigt, wird die Aufgabe dadurch gelöst, dass ein berührungsempfindliches Bedien- und Beobachtungsgerät mit einem Berührungssensor vorhanden ist, wobei der Berührungssensor mit einer Auswerteeinheit verschaltet ist und der Berührungssensor und die Auswerteeinheit ausgestaltet sind, mehrfache Berührungen zu erkennen, wobei der Berührungssensor ein erstes Bedienfeld und ein zweites Bedienfeld aufweist, und die Auswerteeinheit dazu ausgestaltet ist eine Berührung mit einem ersten Bedienobjekt im ersten Bedienfeld und mit einem zweiten Bedienobjekt im zweiten Bedienfeld zu erkennen und entsprechend die Vorgabewerte bereitstellt. Es ist nunmehr möglich, mehrere Werte wie z.B. eine x-Koordinate, eine y-Koordinate und eine z-Koordinate gleichzeitig zu verändern. Die mehrdimensionalen Vorgabewerte können sich auch in eine erste Vorgabekomponente, eine zweite Vorgabekomponente und eine dritte Vorgabekomponente unterteilen ohne den Bezug zu einem x-, y-und z-Koordinatensystem zu haben, beispielsweise können so vektorielle Eingaben getätigt werden.

Eine Weiterbildung des Handsteuergerätes sieht vor, dass die Auswerteeinheit dazu ausgestaltet ist, bei einem erstmaligen Berühren des ersten Bedienobjektes im ersten Bedienfeld als Vorgabewert einen durch die erste Berührung entstandenen ersten Berührpunkt einen Startwert zuzuordnen, wobei der Startwert dem momentanen Istwert des durch die Bedienung zu verändernden Vorgabewertes entspricht. Beispielsweise könnte das Handsteuergerät so konfiguriert sein, dass eine Berührung im ersten Bedienfeld dazu führt eine z-Koordinate zu verändern und eine Berührung im zweiten Bedienfeld dazu führt eine x-, y-Koordinate zu verändern. Wird nun das erste Bedienfeld erstmalig berührt, so wird der zu verändernden z-Koordinate der momentane Istwert der z-Koordinate, beispielsweise einer Rückwärts-Vorwärts-Achseinstellung einer Vorrichtung, übergeben und durch eine örtliche Veränderung des ersten Berührpunktes wird ausgehend von dem Istwert die z-Koordinate als Vorgabewert kontinuierlich verändert. Auch könnte mit dem ersten Bedienfeld eine x-y-Koordinate einer ersten Achse und mit dem zweiten Bedienfeld eine x-y-Koordinate einer zweiten Achse gesteuert werden.

Dabei ist die Auswerteeinheit derart ausgestaltet, dass bei ununterbrochener Berührung des ersten Bedienfeldes mit dem ersten Bedienobjekt jede örtliche Veränderung des ersten Berührpunktes eine Veränderung des Vorgabewertes ergibt.

Eine vorteilhafte Weiterbildung des Handsteuergerätes sieht vor, dass das erste Bedienfeld und das zweite Bedienfeld durch eine Grenzlinie voneinander getrennt angeordnet sind.

Eine weitere Optimierung der Bedienung des Handsteuergerätes wird durch ein Mittel zum Erzeugen einer taktilen Rückmeldung bei Überschreiten der Grenzlinie durch die jeweiligen Bedienobjekte erzielt. Durch die beiden Bedienfelder ist es nun gleichzeitig mehrere Achsen einer Vorrichtung oder generelle mehrere Dimensionen zu ändern. Ein Bediener kann bei einer derartigen Ausgestaltung des Handsteuergerätes die Vorgabewerte verändern ohne dass er auf das Bediengerät blicken muss. Diese Bedienung wird in der Automatisierungstechnik "Halbblindbedienung" genannt. Führt ein Bediener eine Halbblindbedienung an dem Handsteuergerät aus, so berührt er, beispielsweise mit dem Daumen seiner rechten Hand, das erste Bedienfeld um beispielsweise eine z-Koordinate zu verändern und mit dem Zeigefinger seiner rechten Hand berührt er das zweite Bedienfeld um beispielsweise eine x-, y-Koordinate zu verändern. Da er nun zwar seine rechte Hand an den Bedien-und Beobachtungsgerät auf dem Berührungssensor hat, aber seine Blickrichtung eventuell auf die zu steuernde Vorrichtung gerichtet hat, führt er eine Halbblindbedienung aus. Dass bedeutet, sein Blick ist auf die zu steuernde Vorrichtung mit den beispielsweise zu verändernden Achsen gerichtet und nicht mehr auf das Handsteuergerät mit seinem Bedien- und Beobachtungsgerät. Sollte der Bediener nun versehentlich mit seinem Daumen aus dem ersten Bedienfeld herausrutschen und in das zweite Bedienfeld gelangen, so wird er durch das Mittel zum Erzeugen der taktilen Rückmeldung bei Überschreiten der Grenzlinie gewarnt und er kann ebenso "halbblind" seinen Daumen wieder zurück in das erste Bedienfeld positionieren. Eine akustische Rückmeldung ist auch denkbar.

Vorteilhafterweise ist das Handsteuergerät mit dem berührungsempfindlichen Bedien- und Beobachtungsgerät als ein Touchdisplay ausgestaltet.

Bei dem eingangs genannten Verfahren zum Betrieb eines Handsteuergerätes zur Steuerung einer Vorrichtung wird die Aufgabe dadurch gelöst, dass bei einer mehrdimensionalen Eingabe von Vorgabewerten ein berührungsempfindliches Bedien- und Beobachtungsgerät mit einem Berührungssensor, wobei der Berührungssensor mit der Auswerteeinheit derart betrieben wird, dass Mehrfachberührungen erkannt werden, wobei der Berührungssensor in ein erstes Bedienfeld und in ein zweites Bedienfeld untergliedert wird, und die Auswerteeinheit derart betrieben wird, dass eine Berührung mit einem ersten Bedienobjekt im ersten Bedienfeld und eine Berührung mit einem zweiten Bedienobjekt im zweiten Bedienfeld erkannt wird und entsprechende Vorgabewerte bereitgestellt werden.

Auf vorteilhafte Weise wird die Auswerteeinheit derart betrieben, dass bei einem erstmaligen Berühren des ersten Bedienobjektes im ersten Bedienfeld ein erster Berührpunkt registriert wird und als Vorgabewert dem durch die erste Berührung entstandenen ersten Berührpunkt ein Startwert zugeordnet wird, wobei der Startwert dem momentanen Istwert des durch die Bedienung zu verändernden Vorgabewertes entspricht. Durch die Vorgabe eines Startwertes, welcher aus dem momentanen Istwert z. B. einer Achsposition abgeleitet wird, ist es einem Bediener des Handsteuergerätes zur Ausführung z. B. eines Verfahrens einer Achse möglich, dass Handsteuergerät bzw. das Bediengerät zu Bedienen ohne dass er auf das Bediengerät blicken muss, ihm wird also eine Halbblindbedienung hierdurch erleichtert. Die Vorgabe eines Startwertes abgeleitet aus dem momentanen Istwert kann im Sinne der Erfindung als eine automatische Nullpunktgenerierung für das Bedienelement bezeichnet werden, diese automatische Nullpunktgenerierung entsteht beim ersten Berühren des berührungsempfindlichen Berührungssensors z. B. mit einem Finger.

In einem weiteren Verfahrensschritt, welcher das Verfahren weiter optimiert, wird die Auswerteeinheit derart betrieben, dass sich bei einer ununterbrochenen Berührung des ersten Bedienfeldes mit dem ersten Bedienobjekt für jede örtliche Veränderung des ersten Berührpunktes eine Veränderung des Vorgabewertes ergibt.

Um eine Halbblindbedienung zu verbessern, wird das erste Bedienfeld und das zweite Bedienfeld durch eine Grenzlinie voneinander getrennt und es wird ein Mittel zum Erzeugen einer taktilen Rückmeldung derart betrieben, dass bei Überschreiten der Grenzlinie durch die jeweiligen Bedienobjekte eine taktile Rückmeldung auf den Berührungssensor erzeugt wird.

Verfahrensgemäß werden mehrere Vorgabewerte, wie eine x-Koordinate, eine y-Koordinate und eine z-Koordinate gleichzeitig verändert indem mit dem ersten Bedienobjekt der erste Berührpunkt und mit dem zweiten Bedienobjekt der zweite Berührpunkt kontinuierlich verschoben werden.

Ein gleichzeitiges Steuern von drei Achsen einer industriellen Vorrichtung wird durch die Bereitstellung der mehrdimensionalen Vorgabewerte erreicht.

Vorteilhafter Weise wird das Verfahren zum Einsatz in einem Anlernvorgang für eine Vorrichtung bei der ein Roboterarm eingesetzt wird durchgeführt.

In der Zeichnung ist ein Ausführungsbeispiel dargestellt. Es zeigt:
- FIG 1: ein Handsteuergerät und
- FIG 2: eine schematische Mehrachsensteuerung über einen Multitouch.

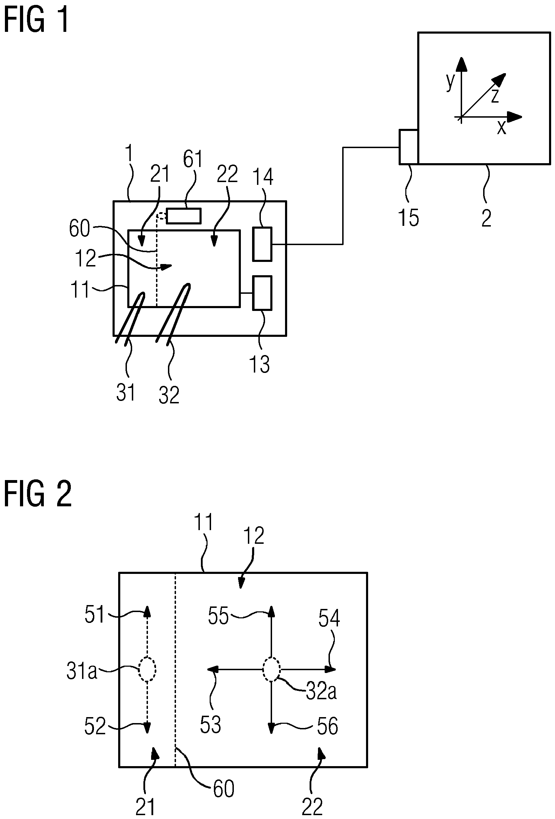

Gemäß der FIG 1 ist ein Handsteuergerät 1 zur Steuerung einer Vorrichtung 2, welche eine mehrdimensionale Eingabe von Vorgabewerten x,y,z benötigt, dargestellt. Ein berührungsempfindliches Bedien- und Beobachtungsgerät 11 ist in dem Handsteuergerät 1 integriert. Das Bedien- und Beobachtungsgerät 11 weist einen Berührungssensor 12 auf, wobei der Berührungssensor 12 mit einer Auswerteeinheit 13 verschaltet ist und der Berührungssensor 12 und die Auswerteeinheit 13 ausgestaltet sind, Mehrfachberührungen zu erkennen, wobei der Berührungssensor 12 ein erstes Bedienfeld 21 und ein zweites Bedienfeld 22 aufweist. Das erste Bedienfeld 21 und das zweite Bedienfeld 22 sind nicht zwangsläufig als separate Bedienfelder anzusehen, vielmehr handelt es sich bei dem Berührungssensor 12 um einen durchgängigen Touch-Sensor, welcher mittels der Auswerteeinheit 13 derart parametriert ist, dass er Berührungen im ersten Bedienfeld 21 und im zweiten Bedienfeld 22 wahrnehmen kann.

Im Handsteuergerät 1 ist weiterhin eine Datenaufbereitungseinheit 14 angeordnet, welche beispielsweise über einen Feldbus mit einer Datenempfangseinheit 15 verbunden ist. Die Datenempfangseinheit 15 wiederum ist der Vorrichtung 2 zugeordnet. Die Vorrichtung 2 kann beispielsweise als ein Positionierroboter für Paletten ausgestaltet sein.

Eine Bedienung des Handsteuergerätes 1 mit einem ersten Bedienobjekt 31 im ersten Bedienfeld 21 und eine Bedienung mit einem zweiten Bedienobjekt 32 in dem zweiten Bedienfeld 22 lässt mit Hilfe des Handsteuergerätes 1 eine gleichzeitige Veränderung der Vorgabewerte, x-Koordinate, y-Koordinate, z-Koordinate, der Vorrichtung 2 zu.

Gemäß FIG 2 ist ein Beispiel einer Mehrachsensteuerung über einen Multitouch dargestellt. Das Bedien- und Beobachtungsgerät 11 weist als Berührungssensor 12 einen Multitouch auf. In der Regel ist das Bedien- und Beobachtungsgerät 11 und der Berührungssensor 12 als eine sogenannte Touch-Displayeinheit ausgestaltet. In dem ersten Bedienfeld 21 ist es möglich eine Vorwärtsbewegungsrichtung 51 bzw. eine Rückwärtsbewegungsrichtung 52 zu verändern.

In dem zweiten Bedienfeld 22 ist es möglich, eine Linksbewegungsrichtung 53, eine Rechtsbewegungsrichtung 54, eine Aufwärtsbewegungsrichtung 55 und eine Abwärtsbewegungsrichtung 56 zu verändern.

Das erste Bedienfeld 21 und das zweite Bedienfeld 22 sind durch eine Grenzlinie 60 voneinander getrennt. Die Grenzlinie 60 kann mit einem Mittel 61 zur Erzeugung einer taktilen Rückmeldung gekoppelt sein. Diese Kopplung dient dazu, dass bei einem Überschreiten des ersten Bedienobjektes 31 (siehe FIG 1) aus dem ersten Bedienfeld 21 heraus in das zweite Bedienfeld 22 herein, einem Bediener die Überschreitung zu signalisieren und er hierdurch aufgefordert wird mit seinem ersten Bedienobjekt 31, beispielsweise seinem Daumen der rechten Hand, wieder zurück zu fahren in das erste Bedienfeld 21. Durch die Warnung mit dem Mittel 61 zur Erzeugung einer taktilen Rückmeldung bei Überschreiten der Grenzlinie 60 wird einem Bediener des Handsteuergerätes 1 eine Halbblindbedienung erleichtert.

Bei einer Bedienung mit beispielsweise einem Daumen einer menschlichen rechten Hand als erstes Bedienobjekt 31 und mit einem Zeigefinger einer menschlichen rechten Hand als zweites Bedienobjekt 32 entsteht im ersten Bedienfeld 21 ein erster Berührpunkt 31a und im zweiten Bedienfeld 22 ein zweiter Berührpunkt 32a. Die beiden Berührpunkte 31a,32a können als flexible Startpunkte, um beispielsweise eine Achsenbewegung zu starten, angesehen werden. Vorteilhafter Weise können diese Startpunkte überall im Bereich des ersten Bedienobjektes 31 bzw. des zweiten Bedienobjektes 32 liegen, denn bei einem erstmaligen Berühren des ersten Bedienobjektes 31 im ersten Bedienfeld 21 wird der erste Berührpunkt 31a registriert und als Vorgabewert bzw. Startwert dem durch die erste Berührung entstandenen ersten Berührpunkt 31a ein momentaner Istwert des durch die Bedienung zu verändernden Vorgabewertes bzw. der zu verändernden Achsposition zugeordnet.

Das erste Bedienfeld 21 stellt einen Bereich dar um eine Achse, z.B. nach hinten bzw. nach vorne zu verfahren (Z-Achse). Das zweite Bedienfeld 22 stellt einen Bereich dar um eine Achse nach oben/unten und rechts/links zu verfahren (X-/Y-Achse).

Im Vergleich zum Stand der Technik ergeben sich mit dem Handsteuergerät 1 folgende Vorteile. Reduzierung von Produktionskosten von Handsteuergeräten da zusätzliche Hardwarekomponenten wie z.B. ein Joystick entfallen können. Die Handsteuergeräte erfahren eine Gewichtsreduzierung, da auf zusätzliche Hardware verzichtet werden kann. Die Handsteuergeräte bieten einen Schutz durch versehentliches Auslösen, da keine hervorstehenden Teile wie z.B. ein Joystick vorhanden sind. Es besteht ein Schutz vor Verschleiß, da zusätzliche Hardwareteile entfallen können. Das Handsteuergerät bietet eine effiziente Bedienung durch das Bedienkonzept mit der automatischen Nullpositionseinstellung bzw. der Vorgabe des momentanen Istwertes als Startwert. Es ermöglicht eine mehrdimensionale simultane Bedienung mehrerer Berührpunkte gleichzeitig, so können z.B. mehrere Finger einer menschlichen Hand gleichzeitig auf dem Berührungssensor Bedienhandlungen ausführen. Insbesondere im industriellen Einsatz kann durch den Einsatz von Touch-Displays eine bessere Dichtigkeit gegen Feuchtigkeit bei den Handsteuergeräten gewährleistet werden, da mechanische Teile entfallen. Die Handsteuergeräte zeichnen sich dadurch aus, dass ihre Baugröße im Vergleich zu mechanischen Steuerelementen weiter reduziert werden kann.

## Patentansprüche

1. Handsteuergerät (1) zur Steuerung einer Vorrichtung (2), welche eine mehrdimensionale Eingabe von Vorgabewerten (x,y,z) benötigt,
**gekennzeichnet durch** ein berührungsempfindliches Bedien- und Beobachtungsgerät (11) mit einem Berührungssensor (12), wobei der Berührungssensor (12) mit einer Auswerteeinheit (13) verschaltet ist und der Berührungssensor (12) und die Auswerteeinheit (13) ausgestaltet sind mehrfach Berührungen zu erkennen, wobei der Berührungssensor (12) ein erstes Bedienfeld (21) und ein zweites Bedienfeld (22) aufweist, und die Auswerteeinheit (13) dazu ausgestaltet ist eine Berührung mit einem ersten Bedienobjekt (31) im ersten Bedienfeld (21) und mit einem zweiten Bedienobjekt (32) im zweiten Bedienfeld (22) zu erkennen und entsprechend die Vorgabewerte (x,y,z) bereitstellt.

2. Handsteuergerät (1) nach Anspruch 1, wobei die Auswerteeinheit (13) dazu ausgestaltet ist bei einem erstmaligen Berühren des ersten Bedienobjektes (31) im ersten Bedienfeld (21) als Vorgabewert (x,y,z) einem durch die erste Berührung entstandenen ersten Berührpunkt (31a) einen Startwert (41,42) zuzuordnen, wobei der Startwert (41,42) dem momentanen Istwert des durch die Bedienung zu verändernden Vorgabewertes (x,y,z) entspricht.

3. Handsteuergerät (1) nach Anspruch 2, wobei die Auswerteeinheit (13) derart ausgestaltet ist, dass bei ununterbrochener Berührung des ersten Bedienfeldes (21) mit dem ersten Bedienobjekt (31) jede örtliche Veränderung des ersten Berührpunktes (31a) eine Veränderung des Vorgabewertes (x,y,z) ergibt.

4. Handsteuergerät (1) nach einem der Ansprüche 1 bis 3, wobei das erste Bedienfeld (21) und das zweite Bedienfeld (22) durch eine Grenzlinie (60) voneinander getrennt angeordnet sind.

5. Handsteuergerät (1) nach Anspruch 4, mit einem Mittel (61) zum Erzeugen einer taktilen Rückmeldung bei überschreiten der Grenzlinie (60) durch die jeweiligen Bedienobjekte (31, 32).

6. Handsteuergerät (1) nach einem der Ansprüche 1 bis 5, wobei das berührungsempfindliche Bedien- und Beobachtungsgerät (11) als ein Touchdisplay ausgestaltet ist.

7. Verfahren zum Betrieb eines Handsteuergerätes (1) zur Steuerung einer Vorrichtung (2), welche eine mehrdimensionale Eingabe von Vorgabewerten (x,y,z) benötigt, wobei über ein berührungsempfindliches Bedien- und Beobachtungsgerät (11) mit einem Berührungssensor (12) der Berührungssensor (12) mit einer Auswerteeinheit (13) derart betrieben wird, dass mehrfach Berührungen erkannt werden, wobei der Berührungssensor (12) in ein erstes Bedienfeld (21) und in ein zweites Bedienfeld (22) untergliedert wird, und die Auswerteeinheit (13) derart betrieben wird, dass eine Berührung mit einem ersten Bedienobjekt (31) im ersten Bedienfeld (21) und eine Berührung mit einem zweiten Bedienobjekt (32) im zweiten Bedienfeld (22) erkannt wird und entsprechende Vorgabewerte (x,y,z) bereitstellt werden.

8. Verfahren nach Anspruch 7, wobei die Auswerteeinheit (13) derart betrieben wird, dass bei einem erstmaligen Berühren des ersten Bedienobjektes (31) im ersten Bedienfeld (21) ein erster Berührpunkt (31a) registriert wird und als Vorgabewert (x,y,z) dem durch die erste Berührung entstandenen ersten Berührpunkt (31a) ein Startwert (41,42) zugeordnet wird, wobei der Startwert (41,42) dem momentanen Istwert des durch die Bedienung zu verändernden Vorgabewertes (x,y,z) entspricht.

9. Verfahren nach Anspruch 8, wobei die Auswerteeinheit (13) derart betrieben wird, dass bei ununterbrochener Berührung des ersten Bedienfeldes (21) mit dem ersten Bedienobjekt (31) jede örtliche Veränderung des ersten Berührpunktes (31a) eine Veränderung des Vorgabewertes (x,y,z) ergibt.

10. Verfahren nach einem der Ansprüche 7 bis 9, wobei das erste Bedienfeld (21) und das zweite Bedienfeld (22) durch eine Grenzlinie (60) voneinander getrennt werden und ein Mittel (61) zum Erzeugen einer taktilen Rückmeldung derart betrieben wird, dass bei überschreiten der Grenzlinie (60) durch die jeweiligen Bedienobjekte (31, 32) eine taktile Rückmeldung auf dem Berührungssensor (12) erzeugt wird.

11. Verfahren nach einem der Ansprüche 7 bis 10, wobei mehrere Vorgabewerte wie eine X-Koordinate, eine Y-Koordinate und eine Z-Koordinate gleichzeitig verändert werden, indem mit dem ersten Bedienobjekt (31) der erste Berührpunkt (31a) und mit dem zweiten Bedienobjekt (32) der zweite Berührpunkt (32a) kontinuierlich verschoben werden.

12. Verfahren nach einem der Ansprüche 7 bis 11, wobei durch die Bereitstellung der mehrdimensionalen Vorgabewerten (x,y,z) ein gleichzeitiges Steuern von drei Achsen einer industriellen Vorrichtung erzielt wird.

13. Verfahren nach einem der Ansprüche 7 bis 12 zum Einsatz in einem Anlernvorgang für eine Vorrichtung bei der ein Roboterarm eingesetzt wird.
